# EUROPÄISCHE PATENTANMELDUNG

(11) **EP 4 844 392 A1**
(43) Veröffentlichungstag der Anmeldung: **25.11.2026**
(21) Anmeldenummer: 25177841.1
(22) Anmeldetag: 21.05.2025
(51) Int. Cl.: G01N 27/414

(54) **VERFAHREN FÜR DAS ERZEUGEN EINER ANLAGESTELLE IN EINEM DIELEKTRIKUM EINES BIOSENSORS SOWIE BIOSENSOR**

(71) Anmelder: Forschungszentrum Jülich GmbH, 52428 Jülich (DE)
(72) Erfinder: VITUSEVYCH, Svitlana, 52353 Düren (DE); BOICHUK, Nazarii, 52428 Jülich (DE)
(74) Vertreter: Gille Hrabal Partnerschaftsgesellschaft mbB Patentanwälte

(57) **Zusammenfassung**

Die Erfindung betrifft ein Verfahren für das Aktivieren einer Anlagestelle (13) im Dielektrikum (5) eines Biosensors, wobei der Biosensor einen Feldeffekttransistor mit Source (2), Drain (4) und Gate (15), einem leitenden Kanal (3) und eine Aufnahme (14) für eine Probe (16) umfasst, wobei der leitende Kanal (3) durch ein Dielektrikum (5) von der Aufnahme getrennt ist, wobei zwei Elektroden (8, 9) vorhanden sind, dadurch gekennzeichnet, dass durch Anlegen einer Spannung an die Elektroden (8, 9) eine Anlagestelle (13) im Dielektrikum aktiviert wird.

Die Erfindung betrifft ferner einen Biosensor umfassend einen Feldeffekttransistor mit Source (2), Drain (4) und Gate (15), einem leitenden Kanal (3) und eine Aufnahme (14) für eine Probe (16), wobei der leitende Kanal (3) durch ein Dielektrikum (5) von der Aufnahme getrennt ist, dadurch gekennzeichnet, dass zwei Elektroden (8, 9) auf dem sind, dadurch gekennzeichnet, dass zwei Elektroden (8, 9) auf dem Dielektrikum (5) vorhanden sind.

Um besonders genau die Position einer Anlagestelle zu aktivieren, sollen die beiden Elektroden (8, 9) spitz aufeinander zulaufen. Die Spitzen der Elektroden liegen sich dann gegenüber.

## Beschreibung

Die Erfindung betrifft ein Verfahren für das Erzeugen einer Anlagestelle in einem Dielektrikum eines Biosensors sowie einen Biosensor.

Ein Biosensor kann einen Feldeffekttransistor (FET) für das Erkennen von Substanzen in einer Probe aufweisen. Die Substanzen können biologische Substanzen sein.

Ein Feldeffekttransistor hat drei Anschlüsse: Gate (Steueranschluss), Source (Eingang) sowie Drain (Ausgang). Der Strom fließt über einen elektrisch leitenden Kanal vom Source zum Drain, wird aber durch die Spannung am Gate gesteuert. Im Gegensatz zu einem Bipolartransistor fließt kaum Strom über das Gate, sondern das Gate erzeugt ein elektrisches Feld, das den leitfähigen Kanal zwischen Source und Drain beeinflusst. Das Gate kann also verwendet werden, um den Stromfluss im elektrisch leitenden Kanal zu steuern.

Der Biosensor kann ein Dielektrikum aufweisen, das den elektrisch leitenden Kanal des Feldeffekttransistors von der Aufnahme trennt. Der Biosensor kann eine Aufnahme für eine Probe aufweisen. Ist eine Probe von der Aufnahme aufgenommen, dann sind Probe und elektrisch leitender Kanal durch das Dielektrikum voneinander getrennt. Beim Biosensor kann das Dielektrikum also den leitenden Kanal des Feldeffekttransistors vom umgebenden Medium (z. B. Flüssigkeit) trennen und das elektrische Feld beeinflussen.

Ein Dielektrikum ist ein nichtleitendes Material, das verwendet werden kann, um elektrische Felder zu beeinflussen, ohne selbst Strom zu leiten. Bei einem Feldeffekttransistor kann ein Dielektrikum das Gate vom elektrisch leitenden Kanal des Gates trennen.

Die Aufnahme kann ein Behälter für ein Aufnehmen einer flüssigen Probe sein. Das Dielektrikum kann eine Wand bzw. den Boden des Probenbehälters bilden oder Teil einer Wand oder Teil des Bodens des Probenbehälters sein.

Der Biosensor kann im Dielektrikum eine Anlagestelle aufweisen. Die Anlagestelle kann im Dielektrikum gezielt erzeugt bzw. aktiviert werden bzw. worden sein. Ein lokaler Defekt im Dielektrikum kann die Anlagestelle bilden. Die Anlagestelle kann Ladungsträger aus dem leitenden Kanal des Feldeffekttransistors einfangen und umgekehrt an den leitenden Kanal abgeben. Die Ladungsträger können Elektronen oder Löcher sein.

Bei einem solchen Biosensor tritt ein Zwei-Niveau-Signal (TLS) auf. Ein Zwei-Niveau-Signal ist ein elektrisches Signal, das zwischen zwei klar unterscheidbaren Zuständen hin- und herspringt. Das Zwei-Niveau-Signal kann die Stromstärke des Stroms sein, der durch den leitenden Kanal des Feldeffekttransistors fließt. Die zwei Stromstärken und damit die zwei Signale können also beispielsweise 1 nA sowie 1.2 nA betragen. Das Signal kann also abrupt von einem Wert auf den anderen springen.

Bei einem FET-Biosensor tritt ein Zwei-Niveau-Signal typischerweise auf, wenn ein einzelnes Molekül oder ein Ladungsträger folgende Aktionen vollzieht:
- bindet oder löst sich von der Sensoroberfläche,
- nähert sich oder entfernt sich vom leitenden Kanal des Feldeffekttransistors,
- wechselt zwischen zwei Konformationen (z. B. bei einem Protein).

Es ändert sich dann das lokale elektrische Feld, was die Leitfähigkeit des Feldeffekttransistors beeinflusst. Das Resultat ist ein sprunghafter Wechsel des Transistorausgangssignals - also ein Zwei-Niveau-Signal.

Aus der Druckschrift "Impact von Light Excitation on Liquid Gate-All-Around Silicon Nanowire Field-Effect Transistor Biosensors with Bowtie Antenna; Yongqiang Zhang, Kai Li, Nazarii Boichuk, Denys Pustovyi, Valeriia Chekubasheva, Hanlin Long, Mykhailo Petrychuk, and Svetlana Vitusevich; Adv. Mater. Technol. 2025, 10, 2400747, DOI: 10.1002/admt.202400747" ist bekannt, dass die Empfindlichkeit von Biosensoren beträchtlich verbessert werden kann, wenn einzelne Fallenphänomene genutzt werden, die zu einem zweistufigen zufälligen Telegraphiesignal (RTS) im Strom führen. Es wird eine Transistorstruktur mit einer vordefinierten Fallenposition unter Verwendung einer Gold-Bowtie-Antenne beschrieben, die durch Licht unterschiedlicher Intensität angeregt werden kann, um die Eigenschaften einer darunter liegenden dielektrischen Schicht zu beeinflussen. Es wurde festgestellt, dass durch die Kombination aus LGAA-Nanodrahtstruktur, gezielter Lichtanregung und Gold-Bowtie-Antenne eine gezielte Aktivierung einzelner Fallen und damit die Kontrolle von RTS möglich ist. Dies führt zu einer deutlich erhöhten Sensitivität für biosensorische Anwendungen wie Einzelmoleküldetektion.

Es ist Aufgabe der Erfindung, einen Biosensor weiterzuentwickeln. Insbesondere soll eine Anlagestelle gut geeignet an einer vordefinierten Position aktiviert werden können.

Die Aufgabe der Erfindung kann durch ein Verfahren mit den Merkmalen des ersten Anspruchs gelöst werden. Der nebengeordnete Anspruch betrifft eine Vorrichtung zur Durchführung des Verfahrens. Abhängige Ansprüche betreffen vorteilhafte Ausgestaltungen.

Die Aufgabe kann durch ein Verfahren für das Aktivieren einer Anlagestelle im Dielektrikum eines Biosensors gelöst werden. Der Biosensor kann einen Feldeffekttransistor mit Source, Drain und Gate und einem leitenden Kanal aufweisen. Ein Dielektrikum kann sich auf dem Kanal befinden. Der Biosensor kann eine Aufnahme für eine Probe umfassen. Das Dielektrikum kann den leitenden Kanal von der Aufnahme trennen. Eine Anlagestelle kann mit einer Spannung im Dielektrikum aktiviert werden. Das Material des Dielektrikums kann Siliziumoxid (SiO₂) sein.

Durch das Anlegen einer Spannung kann eine Anlagestelle gezielt mit technisch einfachen Mitteln definiert und in gut geeigneter Weise aktiviert werden. Das Anlegen einer Spannung kann mithilfe von Elektroden geschehen. Es kann ein Biosensor mit großer Empfindlichkeit erhalten werden.

Es können zwei Elektroden auf einer Oberfläche des Dielektrums aufgebracht sein, um eine Anlagestelle durch Anlegen einer Spannung aktivieren zu können. Die beiden Elektroden können auf der Oberseite des Dielektrikums aufgebracht sein. Oberseite des Dielektrikums meint die Oberfläche des Dielektrikums, die dem elektrisch leitenden Kanal gegenüberliegt, also nicht benachbart zum elektrisch leitenden Kanal angeordnet ist.

Elektrische Leiter für die Elektroden können in einer technisch einfach zu herzustellenden Ausführungsform seitlich herausgeführt sein. Seitlich herausgeführt meint parallel zur Oberseite des Dielektrums. Elektrische Leiter und/oder Elektroden können aus Metall gebildet sein.

Eine jede für ein Aktivieren einer Anlagestelle vorgesehene Elektrode kann wie eine Platte geformt sein. Eine jede Platte kann sich zu einer Seite hin verjüngen. Die sich verjüngenden Seiten der Kontakte können benachbart angeordnet sein. Die beiden Elektroden können spitz aufeinander zu laufen, um besonders geeignet eine Anlagestelle aktivieren zu können. Laufen Elektroden spitz aufeinander zu, dann liegen sich Spitzen der Elektroden gegenüber.

Befinden sich die beiden Elektroden auf der Oberseite des Dielektrikums, dann können die beiden Elektroden vor oder nach der Aktivierung mit einer Schutzschicht bedeckt werden. Die Schutzschicht kann aus einem dielektrisch leitenden Material bestehen. Das Material der Schutzschicht kann Aluminiumoxid (Al₂O₃) sein. Das Bedecken kann durch Atomlagenabscheidung geschehen. Die beiden Elektroden können so vor äußeren Einflüssen geschützt werden. Die beiden Elektroden können so von einer Probe getrennt werden. Die Schutzschicht kann zur Vermeidung von Leckströmen beitragen.

Eine vorzugsweise durch Atomlagenabscheidung aufgebrachte Schutzschicht aus Aluminiumoxid kann Ungleichmäßigkeiten der Elektroden sehr gut abdecken. Es können dann besonders sicher Leckströme vermieden werden. Ein Eindringen von Ionen aus einer Probe (aufgrund von Diffusion) in eine Schutzschicht aus Aluminiumoxid kann deutlich geringer sein als das Eindringen von Ionen ein Dielektrikum, das aus Siliziumoxid gebildet ist. Eine aus Aluminiumoxid gebildete Schutzschicht zusätzlich zu einem aus Siliziumdioxid gebildeten Dielektrikum ist daher besonders zu bevorzugen.

Sollte die Anlagestelle beispielsweise aufgrund von Relaxation inaktiv werden, dann kann erneut eine Spannung an die beiden Elektroden angelegt werden, um die ursprüngliche Leistungsfähigkeit der Anlagestelle wiederherzustellen. Es ist außerdem möglich, eine oder beide Elektroden als Gate zu verwenden, wenn die beiden Elektroden auf der Oberseite des Dielektrikums aufgebracht sind. Es kann aber eine weitere Elektrode bereitgestellt werden, die als Gate verwendet wird. Die weitere Elektrode kann innerhalb der Aufnahme vorgesehen sein.

Das Dielektrikum kann aus Siliziumdioxid (SiO₂) gebildet sein. Das Dielektrikum kann in Form einer Schicht vorliegen. Die Dicke der Schicht kann dünn sein, um gute Messergebnisse erzielen zu können. Die Dicke der Schicht kann beispielsweise wenigstens 1 nm dick oder wenigstens 3 nm dick sein. Die Dicke der Schicht kann beispielsweise nicht mehr als 10 nm dick oder nicht mehr als 8 nm dick sein. Eine derart dünne Oxidschicht kann auf technisch einfache Weise beispielsweise durch Oxidation hergestellt werden.

Siliziumdioxid (SiO₂) ist besonders geeignet als dielektrische Schicht in einem Feldeffekttransistor (FET), insbesondere bei MOSFETs (Metall-Oxid-Halbleiter-FETs). Die Eignung von Siliziumdioxid ergibt sich aus mehreren Gründen: Siliziumdioxid hat eine sehr hohe elektrische Durchschlagsfestigkeit, d. h. es isoliert zuverlässig zwischen Gate und Kanal und verhindert Leckströme. Siliziumdioxid kann sich durch Oxidation direkt auf Silizium bilden und haftet fest. Es gibt dann eine sehr stabile Grenzfläche zwischen Silizium und Siliziumdioxid. Das ist von Vorteil für die Herstellung dünner und gleichmäßiger Schichten. Thermische Oxidation von Silizium zu Siliziumdioxid ist ein gut beherrschter und technisch einfacher Prozess, der hochwertige Schichten erzeugt. Die Aufnahme kann ein Probenbehälter sein. Das Dielektrikum kann eine Wand bzw. den Boden des Probenbehälters bilden oder Teil einer Wand bzw. Teil des Bodens des Probenbehälters sein.

Der FET-Biosensor kann in der medizinischen Diagnostik eingesetzt werden, um beispielsweise Glukose, Krebsmarker und Viren zu detektieren. Durch den FET-Biosensor können Bakterien oder Schadstoffe erkannt werden. Der FET-Biosensor kann schnell reagieren und sehr geringe Konzentrationen nachweisen. Der FET-Biosensor kann klein sein und eignet sich daher gut für tragbare Geräte oder Lab-on-a-Chip-Systeme. Der Energieverbrauch des FET-Biosensors ist gering. CMOSkompatible Technologien können für die Herstellung verwendet werden.

Es zeigen:
Fig. 1 zeigt ein Ausführungsbeispiel der erfindungsgemäßen Vorrichtung in einer Schnittzeichnung.
Fig. 2 zeigt eine Aufsicht auf Elektroden mit elektrischen Anschlüssen einer solchen Vorrichtung.
Fig. 3 zeigt ein Zwei-Niveau-Signal (TLS).
Fig. 4 zeigt Ergebnisse von Vergleichsversuchen.
Fig. 5 zeigt eine Aufsicht auf einen Kanal einer Vorrichtung.
Fig. 6 zeigt eine Aufsicht auf gekreuzte Kanäle.
Fig. 7 zeigte eine Ansicht eines Kanals mit Verjüngung.
Fig. 8 zeigt eine vorteilhafte Anordnung von Elektroden.
Fig. 9 zeigt eine Vorrichtung mit Behälter.
Fig. 10 zeigt Vorrichtung mit einem sich V-förmig verjüngenden Kanal.
Figur 11 zeigt eine Vorrichtung mit einem kleinen Kanal.

Auf einem Substrat 1 können sich halbleitende Bereiche 2, 3, 4 befinden. Der halbleitende Bereich 3 trennt den halbleitenden Bereich 2 vom halbleitenden Bereich 4. Die drei halbleitenden Bereiche 2, 3, 4 können gleich dick sein. Der halbleitenden Bereich 3 kann länger sein als die halbleitenden Bereiche 2 sowie 4. Die drei halbleitenden Bereiche 2, 3, 4 bilden eine Schicht. Die halbleitenden Bereiche 2, 3, 4 können dotiert sein. Die halbleitenden Bereiche 2 und 4 können stärker dotiert sein als der dazwischenliegende Bereich 3. Der halbleitenden Bereich 2 kann als Source verwendet werden. Der halbleitenden Bereich 4 kann als Drain verwendet werden. Der halbleitende Bereich 3 kann den leitenden Kanal bilden. Als Halbleiter kann für die drei Bereiche 2,3, 4 Silizium vorgesehen sein. Der in einem mittleren Bereich angeordnete halbleitenden Bereich 3 kann von einem Dielektrikum 5 bedeckt sein. Das Dielektrikum 5 kann als Schicht vorliegen. Das Dielektrikum 5 kann außerdem einen Randbereich der halbleitenden Bereiche 2 und 4 abdecken. Das Dielektrikum 5 kann aus Siliziumdioxid bestehen.

Auf den halbleitenden Bereichen 2 und 4 können sich aus Metall bestehende Kontakte 6 und 7 befinden. Mithilfe der aus Metall bestehenden Kontakte 6 und 7 kann eine Spannung V_{DS} angelegt werden, damit ein elektrischer Strom i durch den leitenden Kanal 3 fließen kann. Dafür kann der elektrische Kontakt 6 geerdet sein. Eine Spannungsquelle kann dann mit dem elektrischen Kontakt 7 verbunden sein.

Auf dem Dielektrikum 5 können Elektroden 8 und 9 benachbart zueinander angeordnet sein. Die Elektroden 8 und 9 können aus Metall bestehen. Die Elektroden 8 und 9 können durch eine Schicht 10 bedeckt sein. Die Schicht 10 kann aus einem dielektrischen Material wie zum Beispiel Aluminiumoxid bestehen. Es können elektrische Anschlüsse 11, 12 für die Elektroden 8, 9 vorhanden sein. Für die Aktivierung einer Anlagestelle 13 im Dielektrikum 4 kann eine Spannung an die elektrischen Anschlüsse 11,12 angelegt werden. Sobald durch Anlegen einer Spannung an die elektrischen Anschlüsse 11, 12 ein Zwei-Niveau-Signal beobachtet werden kann, ist eine Anlagestelle 13 aktiviert worden. Die angelegte Spannung kann mit der Zeit geändert werden. Durch Überwachung des zum Drain fließenden Stroms kann detektiert werden, sobald ein Zwei-Niveau-Signal auftritt. Die Anlagestelle ist aktiviert worden, sobald das Zwei-Niveau-Signal aufgetreten ist.

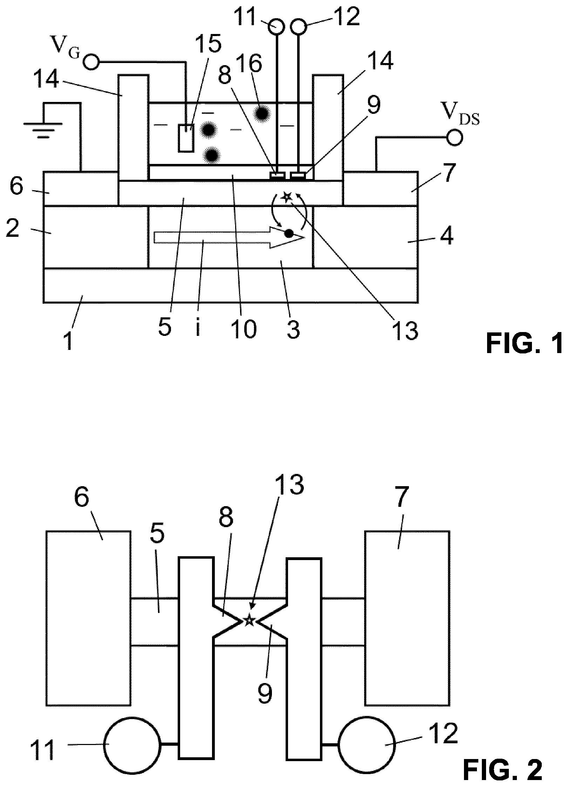

In der Figur 1 ist aus Veranschaulichungsgründen dargestellt, dass sich elektrische Anschlüsse 11, 12 oberhalb der Elektroden 8 und 9 befinden. In der Praxis ist es geeigneter, dass elektrische Leiter, die von den elektrischen Anschlüssen 11 und 12 zu den Elektroden 8 und 9 führen, seitlich aus den Schichten 5 und 10 herausgeführt sind.

Es kann eine Aufnahme in Form eines Behälters mit einer umlaufenden Behälterwand 14 vorhanden sein. Der Boden des Behälters kann durch die Schichten 5, 10 gebildet sein. Innerhalb des Behälters kann eine Elektrode 15 als Gate vorgesehen sein.

Der Behälter kann flüssigkeitsdicht sein, um eine Flüssigkeit mit zu detektierenden Stoffen 16 in den Behälter einfüllen zu können.

Die Anlagestelle 13 im Dielektrikum 3 kann einen als schwarzen Punkt dargestellten Ladungsträger 6 austauschen. Zu jedem Zeitpunkt kann die Anlagestelle 13 mit einem Loch 6 belegt sein oder nicht. Im Fall eines durch einen Stoff initiierten Austausches verändert sich der durch den leitenden Kanal 5 fließende Strom i abrupt. Es steht so ein Signal für die Anwesenheit eines Stoffes 16 in einer beispielsweise flüssigen Probe zur Verfügung.

In der Figur 2 wird eine Aufsicht auf die Elektroden 8 und 9 gezeigt. Die beiden Elektroden 8 und 9 können wie gezeigt spitz aufeinander zulaufen.

Die Schicht 10 kann beispielsweise 10 nm dick sein. Die Schicht 10 kann durch Atomlagenabscheidung aufgebracht worden sein. Das Aufbringen der Schicht 10 kann vor oder nach der Aktivierung der Anlagestelle 13 erfolgt sein. Die Schicht 10 kann vor einem direkten Kontakt der Elektroden 8 und 9 mit einer Flüssigkeit schützen. Es kann so sichergestellt werden, dass durch die Elektroden 8 und 9 eine Anlagestelle bei Bedarf erneut aktiviert werden kann.

Der halbleitende Bereich bzw. Kanal 3 kann wie ein Nanodraht geformt sein. Der Kanal 3 kann einen trapezförmigen Querschnitt aufweisen. Ein trapezförmiger Querschnitt kann durch Anwendung eines chemischen Ätzverfahrens TMAH ((CH3)4NOH) erzielt werden.

Es kann auch das RIE-Trockenätzen angewendet werden. Das RIE-Trockenätzen kann zu einer rechteckigen, gekreuzten Form von Nanodrähten führen. Das RIE-Ätzen entspricht der CMOS-Technologie. Dies ist aus Herstellungsgründen vorteilhaft.

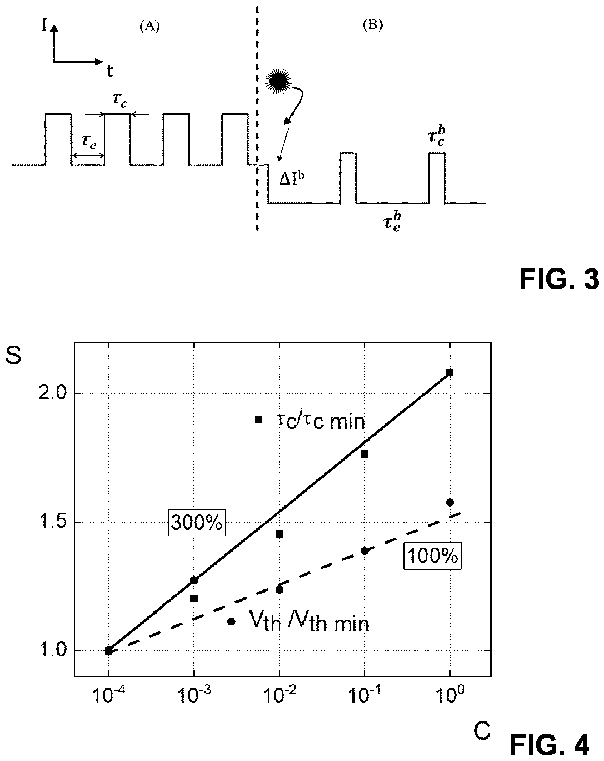

In der Figur 3 wird ein Zwei-Niveau-Signal (Drain-Strom in Abhängigkeit von der Zeit) schematisch dargestellt. Das Signal bezieht sich auf eine Vorrichtung mit aktivierter Anlagestelle 13. Im Abschnitt (A) wird das Signal vor einer Anlagerung geladener Ladungsträger an die Schicht 10 gezeigt. Im Abschnitt (B) wird das Signal nach der Anlagerung geladener Ladungsträger an die Schicht 10 gezeigt.

Die Figur 4 zeigt eine 300%ige Steigerung der Empfindlichkeit S durch Verwendung der charakteristischen Erfassungszeit aus aufgezeichneten Zeitverläufen des Zwei-Niveau-Signals (TLS) im Drain-Strom von erfindungsgemäßen Biosensoren mit einem Kanal in Trapezform mit zwei Elektroden 8 und 9 als Gates als Funktion der Änderung der Konzentration C in einer MgCl₂-Lösungenpresentation. Der Standardansatz mit Änderung der Schwellenspannung Vth zeigt eine dreimal geringere Empfindlichkeit im Vergleich zum TLS-Ansatz.

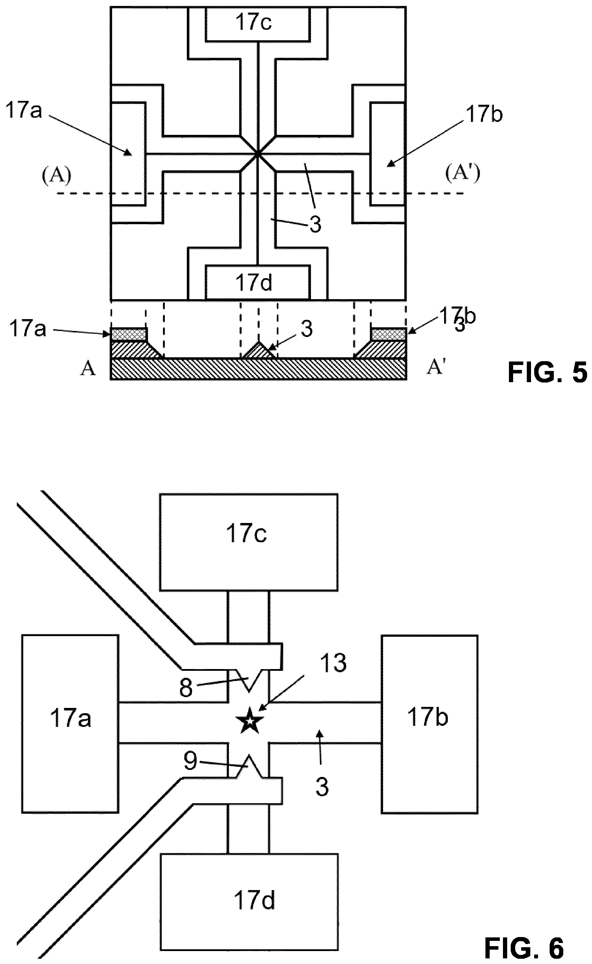

Die Figur 5 zeigt mögliche Formen von Kanälen 3 in einer Aufsicht sowie in einer Schnittdarstellung vor der Herstellung von Elektroden 8 und 9. Die Kanäle 3 haben im Querschnitt aufgrund des chemischen Ätzverfahrens TMAH eine dreieckige Form. TMAH kann durch reaktives Ionenätzen (RIE) ersetzt werden, d. h. durch Trockenätzen. In diesem Fall kann ein vollständig CMOS-kompatibler Technologieprozess verwendet werden und alle gekreuzten Kanäle 3 haben eine rechteckige Form, d.h. im mittleren Teil A-A' eine rechteckige Form statt einer dreieckigen Form. Gezeigt wird außerdem die Form von resultierenden Schichtfolgen 17a bis 17d nach einem Ätzen.

In der Figur 6 wird der Aufbau mit gekreuzten Kanälen 3 gezeigt. Die Figur 6 verdeutlicht außerdem eine mögliche Anordnung von Elektroden 8 und 9 relativ zu den sich Kanälen 3. Die Elektroden 8 und 9 sind angrenzend an den Schnittpunkt der Kanäle 3 so angeordnet, dass eine Anlagestelle 13 beim Schnittpunkt der sich kreuzenden Kanäle 3 aktiviert werden kann. Eine Aktivierung einer Anlagestelle 13 beim Schnittpunkt ist mit dem Vorteil verbunden, dass sämtliche Seiten 17a bis 17d als Source bzw. Drain verwendet werden können, ohne Leistungseinbußen in Kauf nehmen zu müssen.

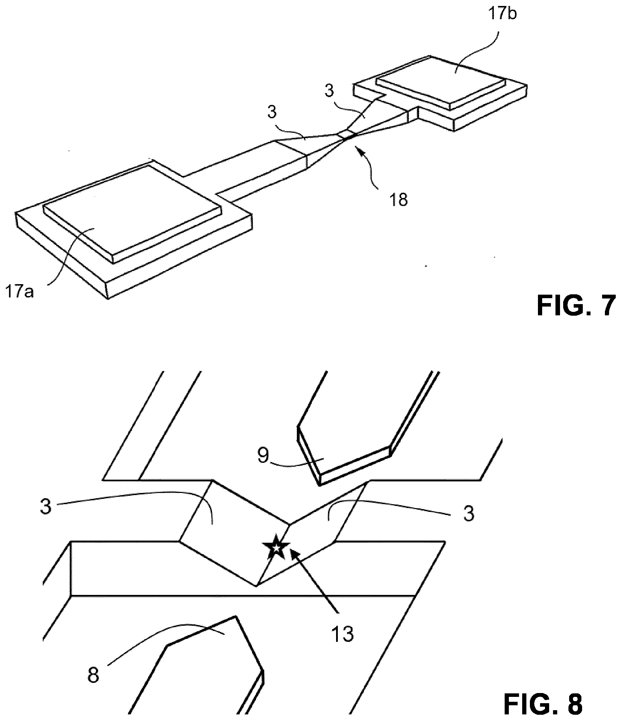

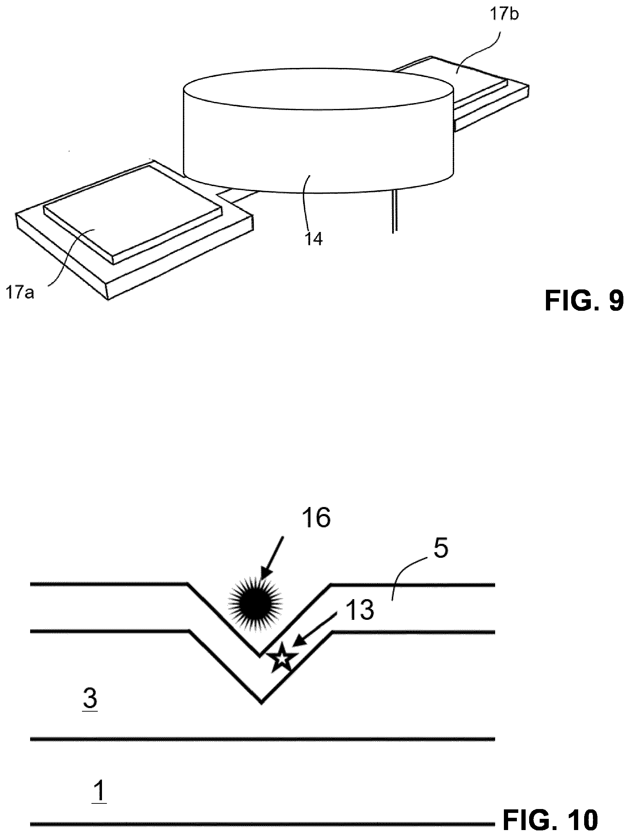

Ein weiteres vorteilhaftes Design mit einem verjüngten Bereich 18 eines Kanals 3 vor dem Aufbringen von Elektroden 8 und 9 wird in der Figur 7 gezeigt. Eine vorteilhafte Anordnung von Elektroden 8 und 9 verdeutlicht die Figur 8. Die Elektroden 8 und 9 sind oberhalb des verjüngten Bereichs 18 so angeordnet, dass eine Anlagestelle vorteilhaft beim verjüngten Bereich 18 aktiviert werden kann. In der Figur 9 wird eine vorteilhafte Anordnung eines Behälters mit Behälterwand 14 oberhalb des Kanals 3 gezeigt.

In der Figur 9 wird ein weiteres vorteilhaftes Design mit einem Kanal 3 gezeigt, der sich V-förmig verjüngt. Elektroden 8 und 9 können seitlich angrenzend so angeordnet werden, dass eine Anlagestelle 13 vorteilhaft beim Grund der V-Form aktiviert werden kann. Eine Kanalgröße von weniger als 20 nm ist möglich. Bei einer Kanalgröße von mehr als 20 nm können die scharfen Bereiche der Elektroden 8 und 9 so abgeschieden werden, dass sie sich in einem V-förmigen Bereich mit einem Abstand von 20 nm befinden.

Die Figur 10 zeigt einen Schnitt durch eine Ausgestaltung mit einem Kanal 3, der sich V-förmig verjüngt. Die Figur 10 verdeutlicht, dass eine Aktivierung einer Anlagestelle 13 gezielt beim Grund der V-Form möglich ist.

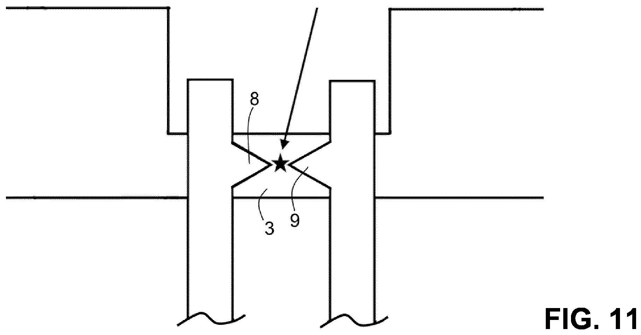

In der Figur 11 wird ein Design gezeigt, gemäß dem eine Nanodraht mit einem kleinen Kanal 3 in der Mitte hergestellt werden, um einen begrenzten Strombereich im Biosensor zu erhalten. Dieser kleine Kanal 3 kann durch chemisches TMAH-Ätzen in dreieckiger Form oder durch RIE-CMOS-Technologie in rechteckiger Form hergestellt werden.

Die Elektroden 8, 9 können durch eine Metallisierungsschicht auf einer 5 nm SiO2-Schicht gebildet werden. Eine sehr dünne Al₂O₃ ALD-Schicht kann sich daran anschließen.

Zur Herstellung kann ein 100 mm-SOI-Wafer mit z. B. 50 nm Si auf 145 nm BOX/Si-Substrat bereitgestellt werden. Beispielsweise kann als Ausgangsmaterial ein 15mm X 15mm großer <100> SOI Wafer verwendet werden. Eine Herstellung ist durch folgende Schritte möglich:
1. Vollständige RCA-Reinigung (WB 3)
1.1. Piranha ( H2O2 : H2SO4 )(2:1)
1.1.1. Mix 1000 mL von H2O2 und 500 mL von H2SO4tauche die Probe für 10 min in diesen Mix ein
1.1.2. Mit destilliertem Wasser spülen bis > 10 MOhmcm
1.1.3. HF ( 1% ) für 10s
1.1.4. Mit destilliertem Wasser spülen bis > 10 MOhmcm
1.2. SC-1 ( destilliertes Wasser: H2O2 : NH4OH ) ( 20:4:1 ) bei 60°C
1.2.1. Mix 1000 mL von destilliertem Wasser, 200 mL von H2O2 und 50 mL von NH4OH, tauche die Probe für 10 min ein
1.2.2. Mit destilliertem Wasser spülen bis > 10 MOhmcm
1.2.3. HF ( 1% ) für 10s
1.2.4. Mit destilliertem Wasser spülen bis > 10 MOhmcm
1.3. SC-2 ( Destilliertes Wasser: H2O2 : HCL ) (20:1:1 ) bei 60°C
1.3.1. Mix 1400 mL von destilliertem Wasser, 70 mL von H2O2 und 70 mL von HCL, Eintauchen der Probe für 10 min
1.3.2. Mit destilliertem Wasser spülen bis > 10 MOhmcm
1.3.3. HF ( 1% ) für 10s
1.3.4. Mit destilliertem Wasser spülen bis > 10 MOhmcm
1.3.5. Trocknen mit N2
1.3.6. Legen der Probe unmittelbar nach der Reinigung in einen Oxidationsofen.
2. SiO2 Hartmaske
2.1. Trockene thermische Oxidation : 20 nm von SiO2
2.2. Ellipsometer-Prüfung ( SE 800 / RSE )
3. E-Beam-Marker-Strukturierung
3.1. Spin-Beschichtung ( WB 2.2 )
3.1.1. Entwässern : 5 min 180° C ( hotplate )
3.1.2. Anwendung von hexamethyldisilazane (HMDS)
3.1.3. Anwendung von AZ 2020 nLof, 4000 rpm, 45s
3.1.4. Weich backen : 1 min 110°C ( hotplate )
3.2. Lithographie ( MA 4 )
3.2.1. Belichtung: 40 mJ*cm -2 ( contact mode )
3.2.2. Nachbelichtung : 1 min 110°C ( hotplate )
3.3. Entwicklung ( WB 2.3 )
3.3.1. AZ 326 MIF für 45s
3.3.2. In destilliertem Wasser spülen
3.3.3. N2 Trocknung
3.4. RIE Markierungen ( RIE4 oder ALE-2 )
3.4.1. O2 : 3s
3.4.2. CHF3/Ar: 10s
3.4.3. SF6 /O2 : 15 s
3.4.4. CHF3 /Ar : 7 min
3.4.5. SF6 /O2 : 30s
3.4.6. O2 ( Entfernen des Resists ( prev. 3 min))
3.5. Reinigung (WB 2.1 )
3.5.1. Acetone 5 min US power 1
3.5.2. IPA 1 min
3.5.3. N2 Trocknung
4. Nanodraht-Strukturierung
4.1. Spin-Beschichtung ( WB 2.2 )
4.1.1. Entwässern : 5 min 180° C ( hotplate )
4.1.2. Anwendung von Hexamethyldisilazane (HMDS)
4.1.3. Anwendung von AR 649.04 200K, 4000 rpm, 45s
4.1.4. Weich backen : 5 min 180°C ( hotplate )
4.2. Elektronenstrahllithografie
4.2.1. Exposition mit einer Dosis von 690 uC*cm -2
4.3. Entwicklung ( WB 2.1 )
4.3.1. AR-P 600-55 für 1 min
4.3.3. In destilliertem Wasser spülen
4.3.4. N2 Trocknung
4.4. RIE für Nanodrähte ( RIE-4 or ALE-2 )
4.4.1. O2 : 3s
4.4.2. CHF3/Ar : 70s
4.4.3. O2 : 1 min + 5 min Gigabatch
5. MEZA Strukturdefinition
5.1. Lösungsmittelreinigung ( WB 2.1 )
5.1.1. Aceton 5 min US power 1
5.1.2. IPA 1 min
5.1.3. N2 Trocknung
5.2. Spin-Beschichtung ( WB 2.2 )
5.2.1. Entwässern : 5 min 180° C ( hotplate )
5.2.2. Anwendung von Hexamethyldisilazane (HMDS)
5.2.3. Anwendung von AZ ECI3012, 4000 rpm, 60s
5.2.4. Weich backen : 1 min 90°C ( hotplate )
5.3. Lithographie ( MA-4 )
5.3.1. Belichtung : 90 mJ*cm -2 ( contact mode )
5.4. Entwicklung ( WB 2.3 )
5.4.1. AZ MIF 326 für 50s
5.4.2. In destilliertem Wasser spülen
5.4.3. N2 Trocknung
5.5. RIE für MESA ( RIE-4 or ALE-2 )
5.5.1. O2 : 3s
5.5.2. CHF3/Ar : 70s
5.5.3. O2 : 2 min
6. Nassätzen von NWs ( WB 4.1 )
6.1. Entfernen von nativem SiOx
6.1.1. HF ( 1% ) für 10s
6.1.2. Mit destilliertem Wasser spülen bis > 10 MOhmcm
6.2. Anisotropes Nassätzen
6.2.1. TMAH 5%, 80°C, 15s
6.2.2. Mit destilliertem Wasser spülen bis > 10 MOhmcm
6.2.3. Trocknen mit N2
7. vollständige RCA Reinigung (WB 3)
4.3.2. IPA für 1 min
7.1. Piranha ( H2O2 : H2SO4 ) ( 2:1 )
7.1.1. Mix 1000 mL von H2O2 und 500 mL von H2SO4, Eintauchen der Probe für 10 min
7.1.2. Mit destilliertem Wasser spülen bis > 10 MOhmcm
7.1.3. HF ( 1% ) für 3 min /* um die Hartmaske zu entfernen*/
7.1.4. Mit destilliertem Wasser spülen bis > 10 MOhmcm
7.2. SC-1 ( Destilliertes Wasser: H2O2 : NH4OH ) ( 20:4:1 ) bei 60°C
7.2.1. Mix 1000 mL von destilliertem Wasser, 200 mL von H2O2 und 50 mL von NH4OH, Eintauchen der Probe für 10 min
7.2.2. Mit destilliertem Wasser spülen bis > 10 MOhmcm
7.2.3. HF ( 1% ) für 10s
7.2.4. Mit destilliertem Wasser spülen bis > 10 MOhmcm
7.3. SC-2 ( Destilliertes Wasser: H2O2 : HCL ) (20:1:1 ) bei 60°C
7.3.1. Mix 1400 mL von destilliertem Wasser, 70 mL von H2O2 and 70 mL von HCL, Eintauchen der Probe für 10 min
7.3.2. Mit destilliertem Wasser spülen bis > 10 MOhmcm
7.3.3. HF ( 1% ) für 10s
7.3.4. Mit destilliertem Wasser spülen bis > 10 MOhmcm
7.3.5. Trocknen mit N2
7.3.6. Platzierung der Proben in den Oxidationsofen unmittelbar nach der Reinigung.
8. Schützende Oxidation
8.1. Trockene thermische Oxidation : 5 nm von SiO2
9. Source/drain Kontakt Implantierung
9.1. Spin-Beschichtung ( WB 2.2 )
9.1.1. Entwässern : 5 min 180° C ( hotplate )
9.1.2. Anwendung von Hexamethyldisilazane (HMDS)
9.1.3. Anwendung von AZ ECI 3012, 4000 rpm, 60s
9.1.4. Weich backen : 1 min 90°C ( hotplate )
9.2. Lithographie ( MA-4 )
9.2.1. Belichtung : 90 mJ*cm -2 ( contact mode )
9.2.2. Nachbelichtung : 90°C, 1 min
9.3. Entwicklung ( WB 2.3)
9.3.1. AZ MIF 326 für 50s
9.3.2. In destilliertem Wasser spülen
9.3.3. N2 Trocknung
9.4. Ionenimplantation
9.4.1. p + - p - p + FETs ( Boron, 6 keV Energie, 10¹⁵ cm ⁻² Dosis )
9.4.2. n + - n - n + FETs ( Arsenic, 8 keV Energie, 5x10¹⁴ cm⁻² Dosis )
9.5. Lösungsmittelreinigung ( WB 2.1 )
9.5.1. Aceton über Nacht
9.5.2. IPA 1 min
9.5.3. N2 Trocknung
10. Vollständige RCA Reinigung (WB 3)
10.1. Piranha ( H2O2 : H2SO4 ) ( 2:1 )
10.1.1. Mix 1000 mL von H2O2 und 500 mL von H2SO4, Eintauchen der Probe für 10 min
10.1.2. Mit destilliertem Wasser spülen bis > 10 MOhmcm
10.1.3. HF ( 1% ) für 3 min /* um die Hartmaske zu entfernen*/
10.1.4. Mit destilliertem Wasser spülen bis > 10 MOhmcm
10.2. SC-1 ( Destilliertes Wasser: H2O2 : NH4OH ) ( 20:4:1 ) bei 60°C
10.2.1. Mix 1000 mL von destilliertem Wasser, 200 mL von H2O2 und 50 mL von NH4OH, Eintauchen der Probe für 10 min
10.2.2. Mit destilliertem Wasser spülen bis > 10 MOhmcm
10.2.3. HF ( 1% ) für 10s
10.2.4. Mit destilliertem Wasser spülen bis > 10 MOhmcm
10.3. SC-2 ( Destilliertes Wasser: H2O2 : HCL ) (20:1:1 ) bei 60°C
10.3.1. Mix 1400 mL von destilliertem Wasser, 70 mL von H2O2 und 70 mL von HCL, Eintauchen der Probe für 10 min
10.3.2. Mit destilliertem Wasser spülen bis > 10 MOhmcm
10.3.3. HF ( 1% ) für 10s
10.3.4. Mit destilliertem Wasser spülen bis > 10 MOhmcm
10.3.5. Trocknen mit N2
10.3.6. Platzierung der Proben in den Oxidationsofen unmittelbar nach der Reinigung.
11. Nach der Implantation RTA ( RTP-4 )
11.1. RTP Ausglühen von Dotierstoffen
11.1.1. p + - p - p + FETs ( 1000 °C, 5s , N2 Atmosphäre )
11.1.2. n + - n - n + FETs ( 950 °C, 30s , N2 Atmosphäre)
12. Gate Oxidation
12.1. Entfernen von nativem SiOx (WB 4.1 )
12.1.1. HF ( 1% ) für 1 min
12.1.2. Mit destilliertem Wasser spülen bis > 10 MOhmcm
12.1.3. Trocknen mit N2
12.2. Trockene thermische Oxidation : 5 nm von SiO2
13. Back Gate und MEZA Pads Öffnung
13.1. Spin-Beschichtung ( WB 2.2 )
13.1.1. Entwässern : 5 min 180° C ( hotplate )
13.1.2. Anwendung von Hexamethyldisilazane (HMDS)
13.1.3. Anwendung von AZ ECI 3012, 4000 rpm, 45s
13.1.4. Weich backen : 1 min 90°C ( hotplate )
13.2. Lithographie ( MA-4 )
13.2.1. Belichtung : 90 mJ*cm -2 ( contact mode )
13.2.2. Nachbelichtung 90°C, 1 min
13.3. Entwicklung ( WB 2.3 )
13.3.1. AZ MIF 326 für 50s
13.3.2. In destilliertem Wasser spülen
13.3.3. N2 Trocknung
13.3.4. Hartbacken : 2 min 120 °C ( hotplate )
13.4. Nasschemisches Ätzen ( WB 4.1 )
13.4.1. BOE ( HF: NH 4 F)( 1:7 ) für 2 min
13.4.2. In destilliertem Wasser spülen
13.4.3. N2 Trocknung
13.5. Resistmaske entfernen ( WB 2.1 )
13.5.1. Aceton 5 min US power 1
13.5.2. IPA 1 min
13.5.3. N2 Trocknung
13.6. Reinigung in Piranha ( H2O2 : H2SO4 ) ( 2:1 )
13.6.1. Mix 1000 mL von H2O2 und 500 mL von H2SO4, Eintauchen der Probe für 10 min
13.6.2. Mit destilliertem Wasser spülen bis > 10 MOhmcm
13.6.3. HF ( 1% ) für 3 min /* um die Hartmaske zu entfernen*/
13.6.4. Mit destilliertem Wasser spülen bis > 10 MOhmcm
13.6.5. N2 Trocknung
14. Metallisierung von Kontakt-Zuleitungen
14.1. Spin-Beschichtung ( WB 2.2 )
14.1.1. Entwässern : 5 min 180° C ( hotplate )
14.1.2. Anwendung von Hexamethyldisilazane (HMDS)
14.1.3. Anwendung von AZ nL von 2020, 4000 rpm, 45s
14.1.4. Weich backen : 1 min 110°C ( hotplate )
14.2. Lithographie ( MA-4 )
14.2.1. Belichtung : 40 mJ*cm -2 ( contact mode )
14.2.2. Nachbelichtung ( 1 min, 110 °C ) ( hotplate )
14.3. Entwicklung (WB 2.3 )
14.3.1. AZ MIF 326 für 45s
14.3.2. In destilliertem Wasser spülen
14.3.3. N2 Trocknung
14.4. Enfernung von nativem SiOx
14.4.1. HF ( 1% ) für 10s
14.4.2. Mit destilliertem Wasser spülen bis > 10 MOhmcm
14.4.3. N2 Trocknung
14.5. Metallisierung ( Univex 400 )
14.5.1. Sputtern von 5 nm von Ti und 250 nm von Al
14.6. Start
14.6.1. In Aceton über Nacht eintauchen
14.6.2. Aceton 5 min US power 1
14.6.3. IPA 1 min
14.6.4. N2 Trocknung
14.7. Plasma Reinigung ( Gigabatch )
14.7.1. 200W_200sccm_5min ( 3 min )
14.8. RTP Ausglühen von Metallkontakten ( RTP-3 )
14.8.1. 450 °C, 10min ausglühen ( AI )
15. Zweite Metallisierung ( Nanogates mit Elektroden )
15.1. Spin-Beschichtung ( WB 7.1 )
15.1.1. Entwässern : 5 min 180° C ( hotplate )
15.1.2. Anwendung von CSAR 6200.09 : AR 600-02 ( 1: 1 ) , 2500 rpm, 60 s
15.1.3. Weich backen : 3 min 150 °C ( hotplate )
15.2. EBL - Lithographie
15.2.1. Belichtung : 800 uC*cm -2
15.3. Entwicklung (WB 7.3 )
15.3.1. AR 600-55 für 60 s
15.3.2. In destilliertem Wasser spülen
15.3.3. N2 Trocknung
15.4. Metallisierung ( Univex 400 )
15.4.1. Sputtern von 5 nm von Ti und 15 nm von Al
( Rezeptname und Ar Plasma )
15.5. Start
15.5.1. AR 600-71 für 2 h
15.5.2. IPA 1 min
15.5.3. Destillierte Wasserspülung
15.5.4. N2 Trocknung
15.6. Plasmareinigung ( Gigabatch )
15.6.1. 200W_200sccm_5min ( 3 min )
16. Atomlagenabscheidung (ALD)
16.1.1. ALD von 20nm Al₂O₃
17. Passivierung
17.1. Spin-Beschichtung ( WB 7.1 ) ( 4000 rpm, 45 s )
17.1.1. Entwässern : 5 min 180° C ( hotplate )
17.1.2. Anwendung von Haftvermittler VM 652
17.1.3. Weich backen : 1 min 110°C ( hotplate )
17.1.4. Anwendung von Polyimide PI 2545
17.1.5. Weich backen : 1 min 140°C ( hotplate )
17.1.6. Weich backen : 6 min 140°C ( hotplate )
17.1.7. Anwendung von AZ nL von 2020 oder AZ ECI3012
( hängt von der Maske ab: negativ/positive )
17.1.8. Weich backen : 1 min 110°C ( hotplate )
17.2. Lithographie ( MA-4 )
17.2.1. Belichtung : 40 mJ*cm -2 ( für nLof )/ 90 mJ*cm -2 (für ECI3012 )
( contact mode )
17.2.2. Nachbelichtung ( 1 min, 110 °C )( für nLof only ) ( hotplate)
17.3. Entwicklung (WB 7.2 )
17.3.1. AZ MIF 326 für 50 s
17.3.2. In destilliertem Wasser spülen
17.3.3. N2 Trocknung
17.4. Resistmasken Entfernung (WB 7.3 )
17.4.1. Aceton 5 min US power 1
17.4.2. IPA 1 min
17.4.3. N2 Trocknung
17.5. Plasma Reinigung ( Gigabatch )
17.5.1. 200W_200sccm_5min ( 2 min )
17.6. Hartbacken in einem Prozessofen ( WB 7.1 ) : 350°C
18. Verpackung
18.1. Spin-Beschichtung ( WB 7.1 )
18.1.1. Entwässern : 5 min 180° C ( hotplate )
18.1.2. Anwendung von 4mL von AR 649.04 200K, 4000 rpm, 45s
18.1.3. Weich backen : 2 min 110°C ( hotplate )
18.2. Schneiden gemäß dem Layout
18.3. Lösungsmittelreinigung
18.3.1. Aceton 5 min US power 1
18.3.2. IPA 1 min
18.3.3. N2 Trocknung

## Patentansprüche

1. Verfahren für das Aktivieren einer Anlagestelle (13) im Dielektrikum (5) eines Biosensors, wobei der Biosensor einen Feldeffekttransistor mit Source (2), Drain (4) und Gate (15), einem leitenden Kanal (3) und eine Aufnahme (14) für eine Probe (16) umfasst, wobei der leitende Kanal (3) durch ein Dielektrikum (5) von der Aufnahme getrennt ist, wobei zwei Elektroden (8, 9) vorhanden sind, **dadurch gekennzeichnet, dass** durch Anlegen einer Spannung an die Elektroden (8, 9) eine Anlagestelle (13) im Dielektrikum aktiviert wird.

2. Verfahren nach Anspruch 1, **dadurch gekennzeichnet, dass** eine elektrische Spannung (V_{DS}) an Source (2) und Drain (4) angelegt wird und der zwischen Source (2) und Drain (4) fließende elektrische Strom überwacht wird, bis eine sprunghafte Änderung des elektrischen Stroms (i) durch das Anlegen der Spannung an die Elektroden (8, 9) registriert wird.

3. Verfahren nach einem der vorhergehenden Ansprüche, **dadurch gekennzeichnet, dass** eine jede Elektrode (8, 9) wie eine Platte geformt ist, die sich zu einer Seite hin verjüngt und die sich verjüngenden Seiten der Elektroden (8, 9) benachbart angeordnet sind.

4. Verfahren nach dem vorhergehenden Anspruch, **dadurch gekennzeichnet, dass** eine jede Elektrode (8, 9) wie ein Dreieck geformt ist.

5. Verfahren nach einem der vorhergehenden Ansprüche, **dadurch gekennzeichnet, dass** Dielektrikum (5) eine aus SiO₂ gebildete Schicht ist.

6. Verfahren nach einem der vorhergehenden Ansprüche, **dadurch gekennzeichnet, dass** das Dielektrikum (5) eine 1 bis 10 nm dicke Schicht ist.

7. Verfahren nach einem der vorhergehenden Ansprüche, **dadurch gekennzeichnet, dass** auf den Elektroden (8, 9) eine Schutzschicht (10) ist.

8. Verfahren nach dem vorhergehenden Anspruch, **dadurch gekennzeichnet, dass** die Schutzschicht aus Al₂O₃ gebildet ist.

9. Biosensor umfassend einen Feldeffekttransistor mit Source (2), Drain (4) und Gate (15), einem leitenden Kanal (3) und eine Aufnahme (14) für eine Probe (16), wobei der leitende Kanal (3) durch ein Dielektrikum (5) von der Aufnahme getrennt ist, **dadurch gekennzeichnet, dass** zwei Elektroden (8, 9) auf dem sind, **dadurch gekennzeichnet, dass** zwei Elektroden (8, 9) auf dem Dielektrikum (5) vorhanden sind.

10. Biosensor nach dem vorhergehenden Anspruch, **dadurch gekennzeichnet, dass** die Elektroden (8, 9) spitz aufeinander zulaufen.

11. Biosensor nach einem der zwei vorhergehenden Ansprüche, **dadurch gekennzeichnet, dass** eine Schutzschicht (10) auf den Elektroden (8, 9) aufgebracht ist.

12. Biosensor nach dem vorhergehenden Anspruch, **dadurch gekennzeichnet, dass** die Schutzschicht (10) aus Aluminiumoxid gebildet ist.

13. Biosensor nach einem der vier vorhergehenden Ansprüche, **dadurch gekennzeichnet, dass** der Biosensor ein Substrat (1) umfasst und Source (2), Drain (4) und leitender Kanal (3) auf dem Substrat (1) vorhanden sind, wobei Source (2), Drain (4) und leitender Kanal (3) aus dotiertem, halbleitendem Material gebildet sind, wobei Source (2) und Drain (4) höher dotiert sind als der leitende Kanal (3).

14. Biosensor nach dem vorhergehenden Anspruch, **dadurch gekennzeichnet, dass** das halbleitende Material Silizium ist.

15. Biosensor nach einem der auf einen Biosensor gerichteten Ansprüche, **dadurch gekennzeichnet, dass** das Dielektrikum (5) aus Siliziumdioxid besteht.
